# NEUE EUROPÄISCHE PATENTSCHRIFT

(11) **EP 3 401 557 B2**
(45) Veröffentlichungstag und Bekanntmachung des Hinweises auf die Entscheidung über den Einspruch: **27.08.2025**
(45) Hinweis auf die Patenterteilung: 06.07.2022
(21) Anmeldenummer: 18171743.0
(22) Anmeldetag: 11.05.2018
(51) Int. Cl.: F16B 25/00, F16B 25/10

(54) **HOLZSCHRAUBE**
WOOD SCREW
VIS À BOIS

(30) Priorität: 12.05.2017 CH 6392017
(43) Veröffentlichungstag der Anmeldung: 14.11.2018
(73) Patentinhaber: Profix AG, 4415 Lausen (CH)
(72) Erfinder: Hofer, David, 4448 Läufelfingen (CH)
(74) Vertreter: Longchamp, Jean-Nicolas

(56) Entgegenhaltungen:
- EP-A1- 0 824 198
- EP-A1- 2 806 174
- EP-A1- 2 806 174
- EP-A1- 3 379 092
- EP-A2- 1 411 252
- WO-A1-2012/098139
- WO-A1-2014/191310
- WO-A1-2017/080983
- CN-Y- 2 474 781
- DE-A1- 102014 205 464
- DE-A1- 102014 205 464
- DE-U1- 202010 010 250
- DE-U1- 202016 006 995
- DE-U1- 202016 101 238
- JP-A- 2006 097 719
- US-A- 1 084 643
- US-A- 2 263 137
- US-A1- 2005 069 396
- US-A1- 2008 286 072
- US-A1- 2009 110 515

## Beschreibung

Die Erfindung betrifft eine Holzschraube zur Verschraubung wenigstens eines Holzelements, die im Bereich ihrer Spitze eine oder mehrere Rippen im Gewindegang zwischen den Gewindeflanken gemäss dem Oberbegriff des Anspruchs 1 umfasst.

Beim Verschrauben von Holzelementen besteht die Gefahr, dass das Holz beim Eindringen der Schrauben gespalten wird und Risse oder Spalten in der Holzstruktur entstehen. Dadurch wird die Belastbarkeit des Holzelements geschwächt und die Qualität des Holzbauelements gemindert. Im schlimmsten Fall kann es zu einem Auseinanderbrechen des Holzelements kommen. Aber vor allem kann es auf der Oberfläche des Holzelements im Eintrittsbereich und Austrittsbereich der Schraube zu Splitterungen und Oberflächenbeschädigungen kommen.

Holzschrauben nach dem Stand der Technik zeigen beispielsweise die Dokumente WO 2012/098139 A und DE 202016006995 U.

Um derartige Beeinträchtigungen von Holzelementen bei ihrer Verschraubung zu vermeiden, werden in der Regel Holzschrauben mit Schneidrippen zwischen den Gewindeflanken im Bereich der Spitze vorgeschlagen. Die Rippen verlaufen im Bereich der Schraubenspitze relativ zum Schraubgewinde mit entgegengesetzter Gewindedrehung und weisen Schneidkanten auf.

Mit den Schneidkanten an den Rippen kann in die Holzfasern der Holzelemente eingeschnitten werden, so dass eine Faserverdichtung und dadurch entstehende Spaltung verringert wird. Zur Ausbildung der Schneidkanten sind die Schneidrippen asymmetrisch ausgebildet, wobei eine steilere Flanke der Eindrehrichtung zugewandt ist.

Es ist eine Aufgabe der vorliegenden Erfindung, eine Holzschraube zu schaffen, die eine zuverlässige Verbindung oder Fixierung von Holzelementen sicherstellt, die beim Einschrauben die Qualität des Holzes nicht beeinträchtigt, ein Spalten oder Splittern des Holzes vermeidet und kostengünstig herstellbar ist.

Diese Aufgabe wird erfindungsgemäss durch eine Holzschraube nach Anspruch 1 gelöst. Vorteilhafte Ausgestaltungen und unterschiedliche Ausführungsformen der Erfindung gehen aus den Unteransprüchen hervor.

Eine Holzschraube zur Verschraubung wenigstens eines Holzelements nach der Erfindung umfasst einen Schaft, der einen Schraubkopf am hinteren Schaftende und ein sich verjüngendes Vorderende aufweist. Ein Schraubgewinde erstreckt sich von der Spitze des Vorderendes in Richtung des Schraubkopfes über wenigstens einen Teil des Schafts. Im Bereich des Vorderendes ist zwischen Gewindeflanken des Schraubgewindes wenigstens eine Rippe vorgesehen.

Erfindungsgemäss ist die wenigstens eine Rippe im Gewindegang erst nach wenigstens einer Gewindelänge des Schraubgewindes vorgesehen. Die Schraube wird dadurch durch mindestens eine Umdrehung sicher im Holzmaterial fixiert, bevor die Rippe oder die Rippen in Kontakt mit dem Holzmaterial kommen und auf das Material einwirken. Da die erste Gewindelänge sich von der Spitze beginnend im Bereich des sich verjüngenden Vorderendes der Schraube liegt, ist der Schraubendurchmesser in diesem Bereich gering und eine Spaltkraft beim Einschrauben minimal. Sobald die Kraft durch einen grösser werden Schraubendurchmesser ansteigt und eine Gefahr der Spaltung oder Splitterung entstehen könnte, beginnt die wenigstens eine Rippe zusätzlich zum Gewinde auf das Holzmaterial des Holzelements einzuwirken,
wodurch das Material abgetragen wird. Es entsteht kein übermässiges Verdichten von Holzfasern, das zu einem Aufspalten des Holzmaterials oder gar der gesamten Platte führen könnte. Mittels der Rippe am Vorderende der Holzschraube wird ein Einführkanal für die Schraube geschaffen, ohne dass Holzmaterial von der Oberfläche des Holzelements absplittert.

Bei einer vorteilhaften Ausgestaltung der Holzschraube sind zwei Rippen jeweils an gegenüberliegenden Umfangsseiten des Schafts vorgesehen. Die gegenüberliegenden Rippen haben einen zentrierenden Effekt beim Eindrehen der Schraube und erleichtern das Einschrauben. Vorteilhaft sind die zwei sich gegenüberliegenden Rippen punktsymmetrisch zur Schaftachse geformt. Dadurch wird eine symmetrische Krafteinwirkung auf das Holzmaterial auf sich gegenüberliegenden Seiten der Schraube erreicht.

Die Rippen sind jeweils im Gewindegang zwischen zwei Gewindeflanken angeordnet. Aufgrund der Gewindesteigung sind die Rippen daher entlang der Schaftachse versetzt angeordnet. Es können auch drei oder mehr Rippen vorgesehen werden, die vorteilhaft äquidistant um den Schaftumfang verteilt sind.

In einer Ausgestaltung der Holzschraube weist die wenigstens eine Rippe eine radiale Höhe vom Schaftumfang auf, die geringer oder höchstens gleich einer Höhe der Gewindeflanken des Schraubgewindes ist. Die Rippe oder die Rippen stehen somit radial nicht über das Schraubgewinde hervor. Dadurch wird sichergestellt, dass das Gewinde am Schraubenschaft in das Holzmaterial eingreifen kann. Vorteilhaft ist die Rippe oder sind die Rippen im Bereich des sich verjüngenden Vorderendes des Schafts angeordnet, so dass der Durchmesser der Rippen kleiner ist, als der Durchmesser der Gewindeflanken im Schaftbereich mit konstantem Durchmesser, der sich an das sich verjüngende Vorderende anschliesst. Die Rippen bereiten somit den Schraubkanal vor und das Gewinde am Schaft greift in das Holzmaterial ein. Vorteilhaft steht die wenigstens eine Rippe der erfindungsgemässen Holzschraube zumindest annähernd radial vom Schaft ab.

Erfindungsgemäss befindet sich die wenigstens eine Rippe im Bereich des sich verjüngenden Vorderendes des Schraubenschafts. Die Aussenkante der Rippe verläuft vorteilhaft parallel zur Oberfläche des Schafts. Im Bereich des sich verjüngenden Vorderendes ist die Rippe daher relativ zur Schaftachse gewinkelt ausgebildet.
In einer Variante einer Rippe einer Holzschraube nach der Erfindung weist die wenigstens eine Rippe eine erste Flanke und eine gegenüber liegende zweite Flanke auf, die eine gemeinsame Aussenkante der Rippe bilden. Die Aussenkante kann dadurch eine scharfe Kante bilden, die das Abtragen des Holzmaterials erleichtert. Wie vorher erwähnt, verläuft die Aussenkante der Rippe vorteilhaft parallel zur Oberfläche des Schafts. Es ist aber auch möglich, dass die Aussenkante gewölbt oder gewinkelt ausgebildet ist oder schräg zur Achse verläuft.

Vorteilhaft weist die wenigstens eine Rippe eine konvex gewölbte Flanke auf, die in Eindrehrichtung der Holzschraube ausgerichtet ist. Somit wirkt die Rippe nahe der Schraubenoberfläche zumindest annähernd senkrecht, d. h. mit einem 90° Winkel, auf das Holzmaterial ein. Mit grösser werdender Entfernung von der Schraubenoberfläche wirkt die Rippe durch die Wölbung der Flanke mit zunehmen flacherem Winkel auf das Holzmaterial ein. Dadurch kann die erforderliche Kraft zum Einschrauben verringert werden.

In einer vorteilhaften Variante einer Rippe einer Holzschraube nach der Erfindung weist die Rippe eine erste Flanke mit einer konkav gewölbten Fläche und eine gegenüber liegende zweite Flanke mit einer konvex gewölbten Fläche auf. Vorteilhaft bilden dabei die Flanken eine gemeinsame Aussenkante der Rippe und die konvexe Flanke der Rippe ist in Eindrehrichtung der Holzschraube ausgerichtet, sodass sie beim Einschrauben optimal auf das Holzmaterial trifft.

Grundsätzlich ist es bei einer Holzschraube nach der Erfindung aber durchaus möglich, dass die Flanken der Rippen eine flache oder eine gewinkelte Fläche aufweisen. Ferner können auch beide Flanken konkav nach innen oder beide konvex nach aussen geformt sein.

Die Rippen erstrecken sich erfindungsgemäss im Gewindegang von einer Gewindeflanke bis zur gegenüber liegenden Gewindeflanke. Die Rippen können dabei zumindest annähernd parallel zur Schaftachse verlaufen. Eine zumindest annähernd parallele Rippe trifft beim Einschrauben der Holzschraube im Wesentlichen senkrecht zur Drehrichtung auf Holzmaterial des Holzelements. Es ist aber auch möglich, dass die Rippen schräg zur Schaftachse ausgerichtet sind, vorzugsweise mit einer Schräge, die in gleicher Richtung wie die Gewindesteigung verläuft.

Die Erfindung wird im Folgenden anhand einer Zeichnung dargestellt, die lediglich zur Erläuterung dienen soll und nicht einschränkend auszulegen ist. Aus der Zeichnung offenbar werdende Merkmale der Erfindung sollen als zur Offenbarung der Erfindung gehörend betrachtet werden. In der Zeichnung zeigen:
- Fig. 1 eine Längsansicht einer Holzschraube nach der vorliegenden Erfindung,
- Fig. 2 einen Querschnitt durch die Holzschraube aus Figur 1 im Bereich von Rippen gemäss der vorliegenden Erfindung,
- Fig. 3 (a) bis (g) Seitenansichten verschiedener Varianten von Rippen an einem vorderen Ende einer Holzschraube, wobei sich in den Ansichten (a)-(d) die Rippen erfindungsgemäss von einer Gewindeflanke bis zur gegenüberliegenden Gewindeflanke erstrecken, und wobei die Ansichten (e)-(g) nicht unter den Schutzumfang des Anspruchs 1 fallen,
- Fig. 4 (a) bis (g) Draufsichten verschiedener Varianten von Rippen an einem vorderen Ende einer Holzschraube, wobei sich in den Ansichten (a)-(e) die Rippen erfindungsgemäss von einer Gewindeflanke bis zur gegenüberliegenden Gewindeflanke erstrecken, und wobei die Ansichten (f)-(g) nicht unter den Schutzumfang des Anspruchs 1 fallen, und
- Fig. 5 (a) bis (1) Querschnittansichten verschiedener Varianten von Rippen einer Holzschraube nach der Erfindung.

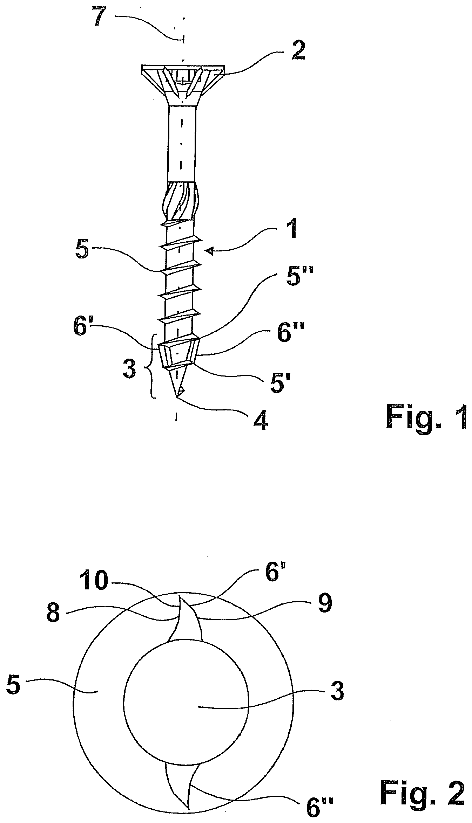

In Figur 1 ist eine Holzschraube zur Verschraubung wenigstens eines Holzelements nach der vorliegenden Erfindung gezeigt. Die Holzschraube kann zur Befestigung von Holzplatten, Brettern, Blöcken oder dergleichen verwendet werden. Die Holzschraube weist einen Schaft 1 auf, der einen Schraubkopf 2 am hinteren Schaftende und einen vorderen Bereich mit einem sich verjüngenden Vorderende 3 umfasst. Von einer Spitze 4 des Vorderendes 3 erstreckt sich ein Schraubgewinde 5 in Richtung des Schraubkopfes 2 über wenigstens einen Teil des Schafts 1.

Im Bereich des Vorderendes 3 sind zwischen zwei Gewindeflanken 5' und 5" des Schraubgewindes 5 zwei Rippen 6' und 6" vorgesehen. Die Rippen 6' und 6" sind symmetrisch aber axial versetzt an sich gegenüberliegenden Seiten des Umfangs des Schafts 1 angeordnet. Weiter weisen die Rippen 6' und 6" zumindest annähernd die gleiche radiale Höhe vom Schaftumfang auf, wie die Gewindeflanken des Schraubgewindes 5. Die Rippen 6' und 6" sind im Bereich des sich verjüngenden Vorderendes 3 angeordnet. Ferner verlaufen die Aussenkanten der Rippen 6' und 6" gewinkelt zur Schaftachse 7 und somit in Richtung der Schraubenspitze 4 aufeinander zu.

Erfindungsgemäss sind die Rippen 6' und 6" im Gewindegang erst nach wenigstens einer Gewindelänge des Schraubgewindes 5 vorgesehen. Der Gewindebereich an der Spitze 4 der Holzschraube ist daher frei von Rippen und das Gewinde schneidet beim Einschrauben radial in das Holzmaterial eines Holzelements und sichert die Positionierung der Schraube auf dem Holzelement und hält die Schraube im Holz fest. Erst beim weiteren Einschrauben wirken die Rippen 6' und 6" auf das Holzmaterial ein und verdrängen dieses grossflächig im Umkreis des Schafts 1, so dass kein Einschneiden und Aufspalten entsteht.

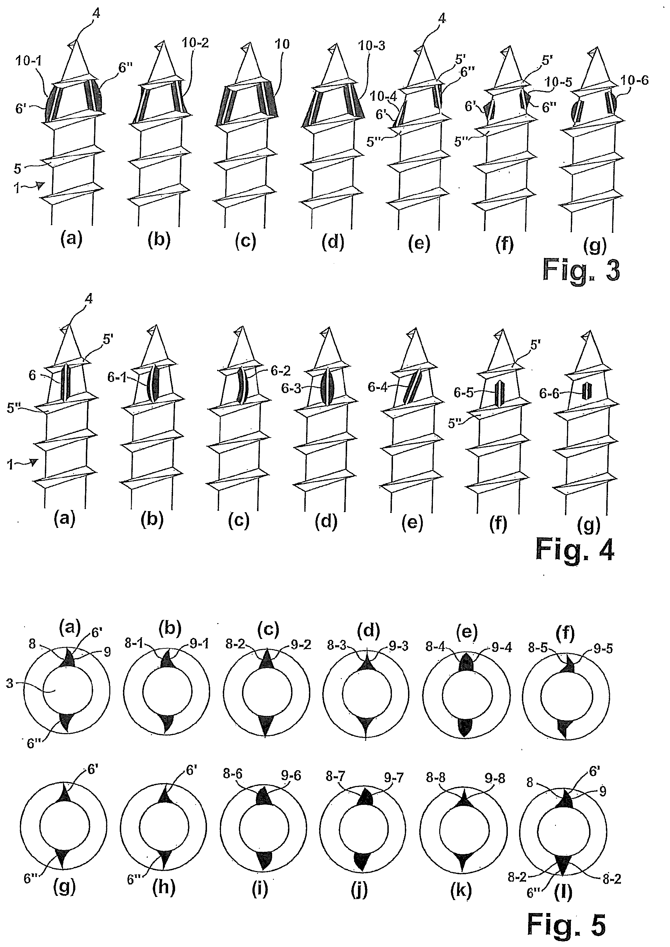

In der Variante der Holzschraube nach Figur 1 wird die Länge der Rippen 6' und 6" der Holzschraube durch die Gewindesteigung und somit durch den Abstand von Gewindeflanken des Gewindes bestimmt. Andere Ausgestaltungen der Rippen werden in den Figuren 3, 4 und 5 gezeigt.

Figur 2 zeigt einen Querschnitt durch die Holzschraube aus Figur 1 im Bereich der Rippen 6' und 6". Daraus wird ersichtlich, dass die Rippen 6' und 6" eine erste Flanke 8 mit einer konkav gewölbten Fläche und eine gegenüber liegende zweite Flanke 9 mit einer konvex gewölbten Fläche aufweisen. Die Flanken 8 und 9 bilden eine gemeinsame Aussenkante 10 einer Rippe 6', bzw. 6". Die konvexe Flanke 9 ist in Eindrehrichtung der Holzschraube ausgerichtet. Die Aussenkante 10 wirkt beim Eindrehen der Holzschraube über ihre gesamte Länge auf das Holzmaterial ein und trägt das Material ab. Somit entsteht eine Art Kanal im Holzelement, ohne dass eine Verdichtung der umliegenden Holzfasern oder Splitterung entsteht. Der Bereich des Schraubgewindes am Schaft 1, der auf das Vorderende 3 folgt, kann in einfacher und effizienter Weise innerhalb des Kanals in das Holzmaterial eingreifen und das Holzelement fixieren.
Mit der in Figur 2 gezeigten Rippen wurden gute Ergebnisse beim Fixieren eines Holzelements erzielt; es ist ein leichtes Einschrauben möglich ohne die Qualität des Holzmaterials und die Oberfläche des Holzelements zu beeinträchtigen.

Die Figuren 3 (a) bis (g) zeigen Seitenansichten weiterer Varianten von Rippen an einem vorderen Ende einer Holzschraube, wobei sich in den Ansichten (a)-(d) die Rippen erfindungsgemäss von einer Gewindeflanke bis zur gegenüberliegenden Gewindeflanke erstrecken, und wobei die Ansichten (e)-(g) nicht unter den Schutzumfang des Anspruchs 1 fallen. Figur 3(a) zeigt Rippen 6' und 6" mit einer nach aussen gewölbten Aussenkante 10-1, während Figur 3(b) Rippen mit einer nach innen gewölbten Aussenkante 10-2 zeigt. Figur 3 (c) zeigt die in Figur 2 beschriebene Variante. Figur 3(d) zeigt eine Variante von Rippen, deren Höhe ausgehend von einer vorderen Gewindeflanke 5' in Richtung einer axial nachfolgenden Gewindeflanke 5" hin zunimmt. Die Aussenkanten 10-3 sind somit schräg zur Schaftoberfläche vorgesehen. In Figur 3(e) sind ebenfalls schräge Aussenkanten 10-4 vorgesehen. Diese verlaufen jedoch nicht über die gesamte Distanz der sich gegenüberliegenden Gewindeflanken 5' und 5". Dabei erstreckt sich die erste Rippe 6' von der Gewindeflanke 5" in Richtung der Spitze der Holzschraube und die zweite Rippe 6" erstreckt sich von der Gewindeflanke 5' in Richtung des Schraubkopfs. Figur 3(f) zeigt eine Variante von Rippen, die in einem mittleren Bereich zwischen den Gewindeflanken 5' und 5" angeordnet sind und gewinkelte Aussenkanten 10-5 aufweisen. Letztlich zeigt Figur 3(g) eine Variante von Rippen in einem mittleren Bereich zwischen den Gewindeflanken 5' und 5", jedoch mit nach aussen gewölbten Aussenkanten 10-6.

Bei der Ausgestaltung der Aussenkanten der Rippen ist es wesentlich, dass die Rippen nicht im Bereich des ersten Gewindegangs zwischen den Gewindeflanken 5' und 5" angeordnet sind. Weiter ist es vorteilhaft, dass die Aussenkanten nicht über die Gewindehöhe der Gewindeflanken 5' und 5" hinaus vom Schaft 1 abstehen.

In den Figuren 4 (a) bis (g) sind Draufsichten verschiedener Varianten von Rippen an einem vorderen Ende einer Holzschraube vorgestellt, wobei sich in den Ansichten (a)-(e) die Rippen erfindungsgemäss von einer Gewindeflanke bis zur gegenüberliegenden Gewindeflanke erstrecken, und wobei die Ansichten (f)-(g) nicht unter den Schutzumfang des Anspruchs 1 fallen. In Figur 4(a) ist eine Rippe 6 gezeigt, wie sie bei der Holzschraube aus den Figuren 1 und 2 verwendet wird. Die Rippe 6 verläuft von einer ersten Gewindeflanke 5' in Richtung des Schraubkopfs bis zu einer zweiten Gewindeflanke 5". Die Rippe 6 verläuft parallel zur Schaftachse. In den Figuren 4(b) und 4(c) sind gebogene Rippen 6-1 und 6-2 gezeigt. Die Rippe 6-1 aus Figur 4(b) ist in Einschraubrichtung eingewölbt, während die Rippe 6-2 aus Figur 4(c) in Einschraubrichtung ausgebaucht ist. Figur 4(d) zeigt eine im Längsschnitt oval geformte Rippe 6-3. Figur 4(e) zeigt eine Rippe 6-4, die gewinkelt zur Schaftachse angeordnet ist. In Figur 4(f) ist eine Rippe 6-5 vorgestellt, wie sie z. B. bei einer Variante einer Holzschraube nach Figur 3(e) verwendet werden könnte. Die Rippe 6-5 verlauft von der Gewindeflanken 5' nicht über die gesamte Distanz bis zur gegenüber liegenden Gewindeflanke 5". Die Rippe 6-6 aus Figur 4(g) liegt in einem mittleren Bereich zwischen den Gewindeflanken 5' und 5".

In Fig. 5 (a) bis (1) sind Querschnittansichten verschiedener Varianten von Rippen einer Holzschraube nach der Erfindung offenbart. Die in Figur 5(a) gezeigte Variante entspricht der Ausführungsform gemäss den Figuren 1 und 2 mit Rippen 6' und 6", die eine erste konkave Flanke 8 und eine zweite konvexe Flanke 9 aufweisen. Die Variante aus Figur 5(b) weist im Gegensatz dazu eine erste Flanke 8-1 mit konvexer Wölbung und eine zweite Flanke 9-1 mit konkaver Wölbung auf. Figur 5(c) zeigt eine erste Flanke 8-2 und eine zweite Flanke 9-2 jeweils mit flacher Fläche. Figur 5(d) zeigt eine erste Flanke 8-3 und eine zweite Flanke 9-3 jeweils mit konkaver Fläche und Figur 5(e) eine erste Flanke 8-4 und eine zweite Flanke 9-4 jeweils mit konvexer Fläche. In Figur 5(f) sind Rippen mit nach innen gewinkelter erster Flanke 8-5 und nach aussen gewinkelter zweiter Flanke 9-5 gezeigt. Die Figur 5(g) zeigt Rippen mit einer nach innen gewinkelten ersten Flanke und einer zweiten Flanke mit flacher Fläche. Die Figur 5(h) zeigt Rippen mit einer ersten Flanke mit flacher Fläche und einer zweiten nach innen gewinkelter Flanke. Figur 5(i) zeigt Rippen mit einer ersten Flanke 8-6 mit konvexer Fläche und einer zweiten Flanke 9-6 flacher Fläche, während Figur 5(j) umgekehrt Rippen mit einer ersten Flanke 8-7 mit flacher Fläche und einer zweiten Flanke 9-7 konvexer Fläche zeigt. In Figur 5(k) ist eine Variante mit Rippen gezeigt, deren beide Flanken 8-8 und 8-9 nach innen eingeknickt sind.

Bei den Varianten der Figuren 5(a) bis 5(k) sind die sich gegenüberliegenden Rippen 6' und 6" punktsymmetrische zur Schaftachse ausgebildet. Grundsätzlich ist es jedoch auch möglich, dass die sich gegenüberliegenden Rippen unterschiedliche Formen haben. In Figur 5(l) ist hierzu ein Beispiel gezeigt, bei dem die Rippe 6' eine konkave Flanke 8 und eine konvexe Flanke 9 nach Figur 5(a) aufweist, während die Rippe 6" zwei flache Flanken 8-2 und 8-3 nach Figur 5(c) aufweist.

Bei allen Varianten stehen die Rippen im Wesentlichen radial von der Holzschraube ab und die zweite Flanke ist in Einschraubrichtung der Holzschraube ausgerichtet.

### Bezugszeichenlegende

1 Schaft
2 Schraubkopf
3 verjüngendes Vorderende
4 Spitze
5 Schraubgewinde
5', 5" Gewindeflanke
6', 6" Rippen
6-1 bis 6-6 Rippe
7 Schaftachse
8 erste Flanke
8-1 bis 8-8 erste Flanke
9 zweite Flanke
9-1 bis 9-8 zweite Flanke
10 Aussenkante
10-1 bis 10-6 Aussenkante

## Patentansprüche

1. Holzschraube zur Verschraubung wenigstens eines Holzelements, wobei die Holzschraube einen Schaft (1) aufweist, der einen Schraubkopf (2) am hinteren Schaftende und ein sich verjüngendes Vorderende (3) aufweist, wobei sich ein Schraubgewinde (5) von einer Spitze (4) des Vorderendes (3) in Richtung des Schraubkopfes (2) über wenigstens einen Teil des Schafts (1) erstreckt und im Bereich des Vorderendes (3) zwischen Gewindeflanken (5' 5'') des Schraubgewindes (5) wenigstens eine Rippe (6', 6'') vorgesehen ist, **dadurch gekennzeichnet, dass** sich die wenigstens eine Rippe (6', 6'') im Bereich des sich verjüngenden Vorderendes (3) befindet und im Gewindegang erst nach wenigstens einer Gewindelänge des Schraubgewindes (5) vorgesehen ist, so dass ein Gewindebereich an der Spitze (4) frei von Rippen (6', 6''), wobei sich die wenigstens eine Rippe (6', 6") im Gewindegang von einer Gewindeflanke (5') bis zu gegenüber liegenden Gewindeflanke (5'') erstreckt.

2. Holzschraube nach Anspruch 1, **dadurch gekennzeichnet, dass** zwei Rippen (6', 6'') vorgesehen sind, die jeweils an gegenüberliegenden Umfangsseiten des Schafts (1) vorgesehen sind.

3. Holzschraube nach Anspruch 2, **dadurch gekennzeichnet, dass** die zwei sich gegenüberliegenden Rippen (6', 6") punktsymmetrisch zur Schaftachse (7) geformt sind.

4. Holzschraube nach einem der vorhergehenden Ansprüche, **dadurch gekennzeichnet, dass** die wenigstens eine Rippe (6', 6'') eine radiale Höhe vom Schaftumfang aufweist, die geringer oder höchstens gleich einer Höhe der Gewindeflanken (5' 5'') des Schraubgewindes (5) ist.

5. Holzschraube nach einem der vorhergehenden Ansprüche, **dadurch gekennzeichnet, dass** die wenigstens eine Rippe (6', 6") zumindest annähernd radial vom Schaft (1) absteht.

6. Holzschraube nach einem der vorhergehenden Ansprüche, **dadurch gekennzeichnet, dass** die wenigstens eine Rippe (6', 6'') eine erste Flanke (8) und eine gegenüber liegende zweite Flanke (9) aufweist, die eine gemeinsame Aussenkante (10) der Rippe bilden.

7. Holzschraube nach einem der vorhergehenden Ansprüche, **dadurch gekennzeichnet, dass** eine konvex gewölbte Flanke (8) der wenigstens einen Rippe (6', 6") in Eindrehrichtung der Holzschraube ausgerichtet ist.

8. Holzschraube nach einem der vorhergehenden Ansprüche, **dadurch gekennzeichnet, dass** die wenigstens eine Rippe (6', 6") zumindest annähernd parallel zur Schaftachse (7) verläuft.

9. Holzschraube nach einem der vorhergehenden Ansprüche, **dadurch gekennzeichnet, dass** die wenigstens eine Rippe (6', 6'') eine erste Flanke (8) mit einer konkav gewölbten Fläche und eine gegenüber liegende zweite Flanke (9) mit einer konvex gewölbten Fläche aufweist.

## Claims

1. Wood screw for screwing at least one wood element, the wood screw having a shank (1) which has a screw head (2) at the rear end of the shank and a tapering front end (3), a screw thread (5) extending from a tip (4) of the front end (3) in the direction of the screw head (2) over at least a part of the shank (1), and at least one rib (6', 6") being provided in the region of the front end (3) between thread flanks (5' 5") of the screw thread (5), **characterized in that** the at least one rib (6', 6") is located in the region of the tapering front end (3) and is provided in the thread path only after at least one thread length which corresponds to one turn of the screw thread (5), such that a threaded region at the tip (4) is free of ribs (6', 6"), wherein the at least one rib (6', 6") extends in the thread pitch from one thread flank (5') to the opposite thread flank (5").

2. Wood screw according to claim 1, **characterized in that** two ribs (6', 6") are provided, which are each provided on opposite circumferential sides of the shank (1).

3. Wood screw according to claim 2, **characterized in that** the two opposing ribs (6', 6") are formed point-symmetrically with respect to the shank axis (7).

4. Wood screw according to any of the preceding claims, **characterized in that** the at least one rib (6', 6") has a radial height from the shank circumference that is less than or at most equal to a height of the thread flanks (5' 5") of the screw thread (5).

5. Wood screw according to any of the preceding claims, **characterized in that** the at least one rib (6', 6") protrudes at least approximately radially from the shank (1).

6. Wood screw according to any of the preceding claims, **characterized in that** the at least one rib (6', 6") has a first flank (8) and an opposite second flank (9) which form a common outer edge (10) of the rib.

7. Wood screw according to any of the preceding claims, **characterized in that** a convexly curved flank (8) of the at least one rib (6', 6") is oriented in the screw-in direction of the wood screw.

8. Wood screw according to any of the preceding claims, **characterized in that** the at least one rib (6', 6") extends at least approximately in parallel with the shank axis (7).

9. Wood screw according to any of the preceding claims, **characterized in that** the at least one rib (6', 6") has a first flank (8) having a concavely curved surface and an opposite second flank (9) having a convexly curved surface.

## Revendications

1. Vis à bois permettant de visser au moins un élément en bois, la vis à bois présentant une tige (1) qui présente une tête de vis (2) au niveau de l'extrémité de tige arrière et une extrémité avant (3) conique, un filetage de vis (5) s'étendant depuis une pointe (4) de l'extrémité avant (3) dans la direction de la tête de vis (2) sur au moins une partie de la tige (1) et au moins une nervure (6', 6") étant prévue dans la zone de l'extrémité avant (3) entre des flancs de filetage (5' 5") du filetage de vis (5), **caractérisée en ce que** l'au moins une nervure (6', 6") est située dans la zone de l'extrémité avant (3) conique et seulement après est prévue au moins une longueur de filetage correspondant à un tour du filetage de vis (5), de sorte qu'une zone de vis est exempte de nervures (6', 6") au niveau de la pointe (4), et **en ce que** l'au moins une nervure (6', 6") s'étend dans le filetage depuis un flanc de filetage (5") jusqu'au flanc de filetage opposé (5").

2. Vis à bois selon la revendication 1, **caractérisée en ce que** deux nervures (6', 6") sont prévues, lesquelles sont respectivement prévues sur des faces périphériques opposées de la tige (1).

3. Vis à bois selon la revendication 2, **caractérisée en ce que** les deux nervures (6', 6") opposées sont formées en symétrie ponctuelle par rapport à l'axe de tige (7).

4. Vis à bois selon l'une des revendications précédentes, **caractérisée en ce que** l'au moins une nervure (6', 6") présente une hauteur radiale, à partir de la circonférence de tige, qui est inférieure ou au plus égale à une hauteur des flancs de filetage (5' 5") du filetage de vis (5).

5. Vis à bois selon l'une des revendications précédentes, **caractérisée en ce que** l'au moins une nervure (6', 6") fait saillie au moins approximativement radialement depuis la tige (1).

6. Vis à bois selon l'une des revendications précédentes, **caractérisée en ce que** l'au moins une nervure (6', 6") présente un premier flanc (8) et un second flanc (9) opposé qui forment un bord extérieur commun (10) de la nervure.

7. Vis à bois selon l'une des revendications précédentes, **caractérisée en ce qu'** un flanc (8) à courbure convexe de l'au moins une nervure (6', 6") est orienté dans le sens de vissage de la vis à bois.

8. Vis à bois selon l'une des revendications précédentes, **caractérisée en ce que** l'au moins une nervure (6', 6") s'étend au moins approximativement parallèlement à l'axe de tige (7).

9. Vis à bois selon l'une des revendications précédentes, **caractérisée en ce que** l'au moins une nervure (6', 6") présente un premier flanc (8) comportant une surface courbée concave et un second flanc (9) opposé comportant une surface courbée convex
